(19) Europäisches Patentamt

European Patent Office

Office européen des brevets

(11) Veröffentlichungsnummer: **0 529 120 A1**

## (12) EUROPÄISCHE PATENTANMELDUNG

(21) Anmeldenummer: **91114233.9**

(22) Anmeldetag: **24.08.91**

(51) Int. Cl.⁵: **H02P 5/40**, B66C 13/22, B66B 1/30

(43) Veröffentlichungstag der Anmeldung:
**03.03.93 Patentblatt 93/09**

(84) Benannte Vertragsstaaten:
**DE ES FR IT NL SE**

(71) Anmelder: **ABUS WERNER BÜHNE KG.**
**Sonnenweg 1**
**W-5270 Gummersbach 1(DE)**

(72) Erfinder: **Bühne, Werner, Dipl.-Ing.**
**Talsperrenweg 1**
**W-5270 Gummersbach(DE)**
Erfinder: **Bube, Eckhard, Dipl.-Ing.**
**Immertweg 10**
**W-5270 Gummersbach(DE)**

(74) Vertreter: **Dörner, Lothar, Dipl.-Ing.**
**Stresemannstrasse 15**
**W-5800 Hagen 1 (DE)**

(54) **Verfahren zur Regelung eines Hubwerkantriebs.**

㊼ Geregelt wird ein Hubwerksantrieb, der aus einem in Verbindung mit einem Frequenzumrichter betriebenen Asynchronmotor besteht und der eine mechanische Bremse aufweist. Erfindungsgemäß wird ein hochdynamisches Regelverfahren verwendet, bei dem das Prinzip der Feldorientierung eingesetzt wird.

EP 0 529 120 A1

Technisches Gebiet:

Die Erfindung bezieht sich auf ein Verfahren zur Regelung eines Hubwerkantriebs, der aus einem in Verbindung mit einem Frequenzumrichter betriebenen Asynchronmotor besteht und der eine mechanische Bremse aufweist.

Stand der Technik:

An einen Hubwerksantrieb werden aus betriebs- und sicherheitstechnischen Gründen u.a. folgende Anforderungen gestellt:

1. Die bewegte Last muß auf kürzestem Weg zum Stillstand gebracht werden können, insbesondere dann, wenn ein Notendschalter betätigt wird.

2. Die angegebene Last muß auch im stromlosen Zustand in ihrer jeweiligen Lage verbleiben.

3. Lasten über dem Nennlastbereich dürfen nicht angehoben werden.

4. Die angehobene Last darf nach Einleitung eines erneuten Hubvorgangs nicht absacken.

Ein Hubwerksantrieb, der aus einem in Verbindung mit einem Frequenzumrichter betriebenen Asynchronmotor besteht, erfüllt die unter den Ziffern 3 und 4 genannten Anforderungen nur unbefriedigend: Der Hubwerksantrieb erbringt das zum Lastenheben erforderliche Drehmoment nur bis zu einer unteren Grenzfrequenz von ca. 5 Hz. Aus diesem Grund ist das erreichbare Steuerverhältnis begrenzt. Die mechanische Bremse muß ab dieser unteren Grenzfrequenz einfallen und darf bei erneutem Betrieb erst nach vollständigem Drehmomentaufbau des Motors gelüftet werden. Außerdem ist es grundsätzlich wünschenswert, bei gleicher Motorleistung für große Verfahrwege mit kleinen Lasten hohe Hubgeschwindigkeiten zu erreichen, was bei einer Asynchronmaschine durch Betrieb im Feldschwächebereich möglich ist.

Darstellung der Erfindung:

Der Erfindung liegt die Aufgabe zugrunde, ein Verfahren zur Regelung eines Hubwerksantriebs der eingangs genannten Art zu schaffen, mit dem die vier genannten Bedingungen, insbesondere auch die Bedingungen 3 und 4, und auch das als wünschenswert bezeichnete Verhalten erfüllt werden. Gemäß der Erfindung wird diese Aufgabe gelöst durch den Einsatz eines hochdynamischen Regelverfahrens, bei dem das Prinzip der Feldorientierung eingesetzt wird.

Das Prinzip der Feldorientierung ist von Blaschke beschrieben worden (Blaschke "Das Verfahren der Feldorientierung zur Regelung der Asynchronmaschine" aus "Siemens Forsch. u. Entwickl.-Ber. Bd. 1 Nr. 1/72 Springer Verlag 1972 S. 184 ff; vgl. auch Holtz u. Bube "Field-oriented Asynchronous Pulsewidth Modulation...", 1988 IEEE S. 412 ff). Bei dem Verfahren nach Blaschke wird der Ständerstrom in einem auf den Rotorfluß bezogenen Koordinatensystem betrachtet. In diesem Koordinatensystem entspricht die imaginäre Ständerstromkomponente dem Drehmoment der Maschine, während die reelle Ständerstromkomponente proportional dem Erregungszustand der Maschine ist. Durch die entkoppelte Betrachtungsweise der beiden Ständerstromkomponenten läßt sich die Maschine in einem weiten Bereich hochdynamisch regeln.

Der Rotorfluß wird aus dem der Rotorspannungsgleichung in Feldkoordinaten abgeleiteten Modell der Maschine berechnet. Dieses Maschinenmodell liefert die Lage des Rotorflußraumzeigers mit ausreichender Genauigkeit für die Regelung bis zur Drehzahl Null, so daß die Maschine über den gesamten Aussteuerungsbereich auf Nennmoment geregelt werden kann.

Immer dann wenn die Last vom Stillstand ausgehend gehoben oder gesenkt werden soll, wird die mechanische Bremse ohne Verzögerung gelüftet. Der überlagerte Regelkreis ist nun in der Lage, den sich aus diesem neuen Betriebszustand ergebenden, durch die Last bestimmten Drehmoment-Istwert durch den Motor innerhalb weniger Millisekunden bereitzustellen. Die Massenträgheit des Antriebssystems ist dabei so groß, daß die gehobene Last innerhalb der für das Drehmoment benötigten Anregelzeit nicht durchsackt. Daraus ergibt sich zusätzlich eine höhere Einschaltdauer des Antriebssystems, da die um den Faktor zwei bis vier höheren Anlaufströme nicht auftreten können.

Ein für die feldorientierte Regelung eingesetzter 16-Bit Mikrokontroller gestattet außerdem die Programmierung verschiedener Zusatzfunktionen, z.B. das Fahren von Anfahr- und Bremsrampen, sowie die Reduktion des abzugebenden Drehmoments bei überhöhter Temperatur des Motors.

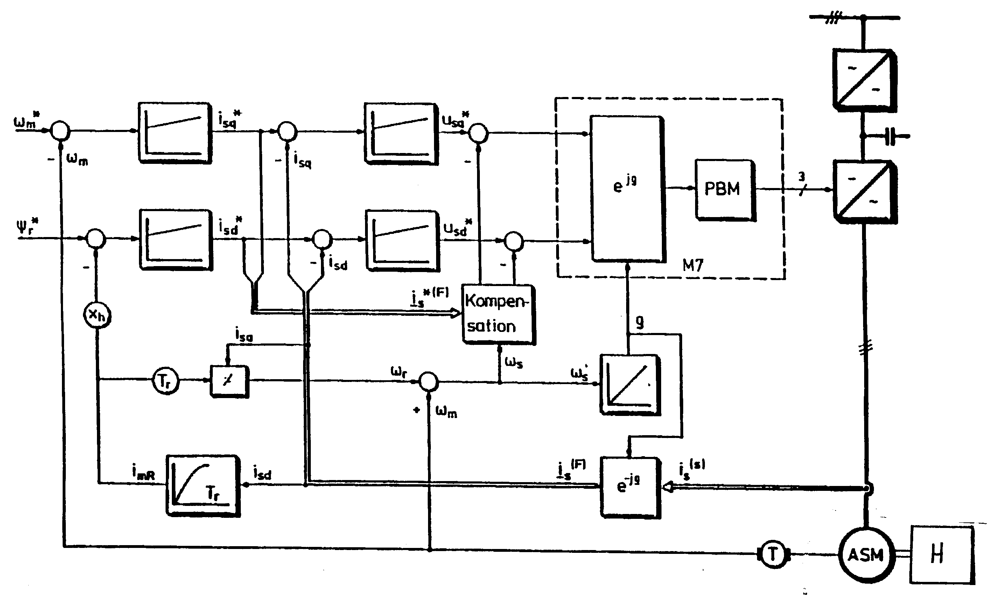

Kurze Beschreibung der Zeichnung:

Ein Ausführungsbeispiel der Erfindung ist in der Zeichnung dargestellt und wird nachfolgend beschrieben. Die einzige Figur zeigt ein Blockschaltbild der Regelstruktur für die Durchführung des Verfahrens nach der Erfindung.

In der Zeichnung sind folgende Formelzeichen verwendet:

| | |
|---|---|
| * | Sollwerte |
| (F) | Feldkoordinaten |
| (S) | Ständerkoordinaten |
| $i_s$ | Ständerstrom |
| $\overline{i}_{sd}$ | Realkomponente des Ständerstroms in Feldkoordinaten |
| $i_{sq}$ | Imaginärkomponente des Ständerstroms in Feldkoordinaten |
| $i_{sr}$ | Magnetisierungsstrom |
| $u_{sd}$ | Realkomponente der Ständerspannung in Feldkoordinaten |
| $u_{sq}$ | Imaginärkomponente der Ständerspannung in Feldkoordinaten |
| $\rho$ | Feldwinkel |
| $\psi_r$ | Rotorfluß |
| $\omega_r$ | Rotor-Winkelgeschwindigkeit |
| $\omega_m$ | mechanische Winkelgeschwindigkeit |
| $\omega_s$ | Ständerwinkelgeschwindigkeit |
| $x_h$ | Hauptinduktivität |
| PBM | Pulsbreitenmodulator |
| $T_r$ | Rotorzeitkonstante |
| T | Drehzahlmeßgerät |
| ASM | Asynchronmaschine |
| M7 | Pulsbreitenmodulator |
| H | Hubwerk mit mechanischer Bremse |

Bester Weg zur Ausführung der Erfindung:

Die Schwierigkeiten einer Drehstrommaschine, verglichen mit einer Gleichstrommaschine, liegen zum einen darin, daß an Stelle von zwei Gleichspannungen drei Wechselspannungen mit veränderlicher Amplitude, Frequenz und Phase zu steuern sind; hinzu kommen die Kopplungen der Steuergrößen mit den inneren Regelgrößen. Außerdem sind bei einem Kurzschlußläufermotor die Rotorströme einer Messung nicht zugänglich.

Diese Schwierigkeiten lassen sich durch Einführung von Feldkoordinaten überwinden. Die Dynamik der Drehstrommaschine wird damit auf die einer fremderregten kompensierten Gleichstrommaschine zurückgeführt. Zu diesem Zweck ist ein komplexer Flußvektor zu definieren, der die im Luftspalt der Maschine umlaufende räumlich sinusförmige Flußwelle kennzeichnet. Bezieht man nun die Ständer-Durchflutungswelle, also den Ständerstromvektor $i_s(t)$, auf diese Flußwelle, so gilt, daß nur die Querkomponente der Durchflutung einen Beitrag zum Drehmoment leistet, während sich mit der Längskomponente der Durchflutung der Betrag des Flusses steuern läßt. Diese Zerlegung des Ständerstromvektors entspricht der Einführung von Koordinaten, deren Orientierung durch die Flußrichtung bestimmt ist, d.h. von Feldkoordinaten. Damit besteht eine unmittelbare Analogie zur Gleichstrommaschine. Auch das anzuwendende Regelverfahren ist dadurch im Prinzip festgelegt.

Im Gegensatz zum d-q-System bei Synchronmaschinen ist die Feldachse nicht durch die Läuferstellung bestimmt. Die Flußwelle soll vielmehr durch einen läuferbezogenen Magnetisierungsstromvektor beschrieben werden, der im stationären Zustand eine Spannung $\overline{U}_{mr}$ induziert.

$$i_{mr} = i_s(t) + (1 + \sigma_r)i_r(t)e^{j\epsilon} = i_{mr}e^{j\rho} \qquad (1)$$

Die Winkelgeschwindigkeit dieses Vektors entspricht der Ständerfrequenz

$$\frac{d\rho}{dt} = \omega_s(t) \qquad (2)$$

Damit gilt folgende Zerlegung in Längs- und Querachse

$$i_s(t)e^{-j\rho} = i_{sd} + ji_{sq} \qquad (3)$$

3

$$u_s(t)e^{-j\rho} = u_{sd} + ju_{sq} \qquad (4)$$

Abgesehen von stromrichterbedingten Oberschwingungen sind die transformierten Größen im stationären Zustand konstant, was die Regelung wesentlich erleichtert.

Das Einsetzen der in den Gleichungen (1) bis (4) definierten Größen in ein nichtstationäres Maschinenmodell und Aufspaltung in Real- und Imaginärteil führen auf sechs reelle Differentialgleichungen, die die transformierten Variablen mit den mechanischen Größen verbinden.

Mit $T_s = L_s/R_s$ und $T_r = L_r/R_r$ erhält man

$$\sigma_s \, \bar{l}_s \, \frac{d\,i_{sd}}{dt} + \dot{i}_{sd} = \frac{u_{sd}}{R_s} + \omega_s \, \sigma \, \bar{l}_s \, i_{sq} - (1-\sigma)\bar{i}_s \, \frac{d\,i_{mr}}{dt} \qquad (5)$$

$$\sigma_s \, \bar{l}_s \, \frac{d\,i_{sq}}{dt} + \dot{i}_{sq} = \frac{u_{sq}}{R_s} + \omega_s \, \sigma \, \bar{l}_s \, i_{sd} - (1-\sigma)\omega_s \, \bar{l}_s \, i_{mr} \qquad (6)$$

$$\bar{l}_r \, \frac{d\,i_{mr}}{dt} + \dot{i}_{mr} = \dot{i}_{sd} \qquad (7)$$

$$\frac{d\rho}{dt} = \omega_s = \frac{i_{sq}}{l_r \, i_{mr}} + \omega_m = \omega_r + \omega_m \qquad (8)$$

$$(H)\frac{d\omega}{dt} = m_{el} - m_L = k \, i_{mr} \, i_{sq} - m_L \, ; \, k = \frac{2}{3}\frac{L_h}{1+\sigma_r} \qquad (9)$$

$$\frac{d\epsilon}{dt} = \omega_m \qquad (10)$$

Die Gleichungen (5) und (6) beschreiben den Zusammenhang zwischen den transformierten Spannungen $U_{sq}$, $U_{sd}$ und den Strömen $i_{sq}$, $i_{sd}$. Es handelt sich dabei um Verzögerungsglieder mit Streuzeitkonstanten und einigen Kopplungsthermen, die sich durch Aufschaltungen bei den Stromreglern eliminieren lassen.

In der Längsachse ist die Erregerzeitkonstante der Maschine wirksam, Gleichung (7), wobei $i_{sd}$ als Anregung dient;

in der Querachse, Gleichung (8), (9), steuert $i_{sq}$ die Ständerfrequenz und das Drehmoment, das als Produkt aus Magnetisierungsstrom und Ständerquerstrom erscheint.

Die günstige Regelstrategie bei Gleichstrommaschinen besteht darin,den Erregerfluß auf dem jeweils erreichbaren Sollwert zu halten, wobei im Grunddrehzahlbereich die Eisensättigung, im Feldschwächbereich die maximale Ankerspannung die Grenze setzen. Das gleiche Prinzip ist auch hier gültig. Gleichzeitig werden damit die in den Gleichungen (5) bis (10) enthaltenen nichtlinearen Kopplungen verringert.

Im unteren Teil des den Gegenstand der Zeichnung bildenden Blockschaltbildes ist das Maschinenmodell in Feldkoordinaten einschließlich der Transformationsbeziehungen dargestellt. Die Transformation erfolgt in zwei Schritten. Zuerst werden über einen Meßwandler die Strangströme $I_a$ und $I_b$ erfaßt. Daraus wird der Raumvektor wie folgt berechnet:

$$I_{alpha} = I_a$$
$$I_{beta} = (I_a + 2\,I_b)\frac{1}{\sqrt{3}}$$

Um anschließend die Koordinatentransformation ins d-q-System durchführen zu können, benötigt man den Feldwinkel $\rho$ . Diesen erhält man durch Integration der Statorfrequenz.

$$\rho = \int \omega_s dt \; ; \; \omega_s = \omega_m + \omega_r$$

Nun kann die Transformation nach folgenden Gleichungen erfolgen:

$$i_{sd} = i_{alpha} \cos(\rho) + i_{beta} \sin(\rho)$$
$$i_{sq} = i_{beta} \cos(\rho) - i_{alpha} \sin(\rho)$$

Die mechanische Drehzahl $\omega_m$ wird direkt über einen Tachogenerator erfaßt und die Schlupffrequenz $\omega_r$ berechnet sich, wie man aus Gleichung (8) sehen kann, zu

$$\omega_r = \frac{i_{sq}}{i_{mr} \, T_r}$$

Um den Magnetisierungsstrom $i_{mr}$ zu erhalten, ist es erforderlich, die d-Komponente des transformierten Stromraumzeigers durch einen Tiefpaß mit $T_r$ als Zeitkonstante zu glätten. Aus dem Magnetisierungsstrom läßt sich der Flußvektor nun berechnen:

$$\psi_r(t) = L_h i_{mr}(t)$$

Im oberen Teil des Blockschaltbilds ist ein allgemeines Regelschema in Feldkoordinaten skizziert. Die gesamte Regelung besteht aus insgesamt vier Reglern, die alle als PI-Regler arbeiten.

$$y = V\boldsymbol{x} + \frac{V}{T_n} \int \boldsymbol{x} \, dt$$

Im inneren Regelkreis befinden sich zwei Stromregler, überlagert ein Drehzahl- und ein Flußregler. Diese Anordnung illustriert den Grundgedanken der feldorientierten Regelung. Die Reglerausgangsgrößen $U_{sd}$ und $u_{sq}$ wirken direkt auf eine Gleichstrom-Regelstrecke. Wenn der Magnetisierungsstrom nun noch auf seinem jeweiligen Sollwert gehalten wird, entfallen einige der nichtlinearen Kopplungen in der Dynamik der Maschine. Der überlagerte Drehzahlregler bzw. Flußregler entspricht wieder vollständig der bei Gleichstrommaschinen üblichen Kaskadenstruktur. Auch hier können alle internen Sollwerte auf einfache Weise begrenzt werden.

Man erkennt,daß bei diesem Regelschema kein Steuerbarer Oszillator vorhanden ist; vielmehr wird die Ständerfrequenz durch das aus den Maschinengrößen abgeleitete Flußsignal vorgegeben. Der Motor steuert sich damit selbst, ähnlich wie dies bei einem Gleichstrommotor durch den Kommutator geschieht. Er kann deshalb auch nicht mehr außer Tritt fallen; bei Überlastung oder bei zu schnellen Änderungen des Drehzahlsollwertes werden Drehmoment und Schlupf auf vorgebbare Maximalwerte begrenzt.

Als Ausgabeeinheit dient der Pulsbreitenmodulator M7.

Wenn der Erregerfluß konstant gehalten wird, entfallen einige der nichtlinearen Kopplungen in den Gleichungen (5) bis (10). Da die Stromabtastzeit 1ms beträgt, die Stromänderungszeiten aber wesentlich kleiner sind, würden die Ableitungen der Ströme zu großen Ungenauigkeiten führen. Aus diesem Grund wurde auf diese Terme gänzlich verzichtet. Dabei entstehen keine großen Dynamikverluste, wenn die Stromregler schnell genug ausgelegt werden.

Der übriggebliebene Term kann nun durch einfaches Aufaddieren bei den Stromreglern zu einer Kompensation der Kopplungen beitragen.

$$-\left(\omega_s \sigma \bar{l}_s \dot{i}_{sq}{}^{*}\right) \quad ; \text{ Term 1}$$

$$+\left(\omega_s \sigma \bar{l}_s \dot{i}_{sd}{}^{*}\right) \quad ; \text{ Term 2}$$

Zur Ausführung der Kompensation wird im anschließenden Programm Term 1 dem $i_{sd}$ -Regler und Term 2 dem $i_{sq}$ -Regler aufgeschaltet.

Gewerbliche Verwertbarkeit:

Die Erfindung ist gewerblich verwertbar bei Hubwerkantrieben.

**Patentansprüche**

1. Verfahren zur Regelung eines Hubwerksantriebs, der aus einem in Verbindung mit einem Frequenzumrichter betriebenen Asynchronmotor besteht und der eine mechanische Bremse aufweist, gekennzeichnet durch ein hochdynamisches Regelverfahren, bei dem das Prinzip der Feldorientierung eingesetzt wird.

2. Verfahren nach Anspruch 1, dadurch gekennzeichnet, daß der Ständerstrom des Asynchronmotors in einem auf den Rotorfluß bezogenen Koordinatensystem betrachtet wird, in dem die imaginäre Ständerstromkomponente proportional dem Drehmoment, die reelle Ständerstromkomponente proportional dem Erregungszustand der Asynchronmaschine ist.

3. Verfahren nach Anspruch 1 oder 2, dadurch gekennzeichnet, daß der Rotorfluß aus dem der Rotorspannungsgleichung in Feldkoordinaten abgeleiteten Modell der Asynchronmaschine berechnet wird.

4. Verfahren nach einem der Ansprüche 1 bis 3, dadurch gekennzeichnet, daß für die feldorientierte Regelung ein 16-Bit Mikrokontroller eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 536 483 (BOSCH)<br>* insgesamt *<br>--- | 1-4 | H 02 P 5/40<br>B 66 C 13/22<br>B 66 B 1/30 |
| X | DE-A-4 025 991 (MITSUBISHI)<br>* Spalte 1, Zeile 1 - Spalte 2, Zeile 56; Figur 1 *<br>--- | 1-4 | |
| X | DE-A-4 030 761 (YUZURU et al.)<br>* Seite 2, Zeile 3 - Seite 3, Zeile 29; Figuren 5,6 *<br>--- | 1-4 | |
| A | GB-A-2 190 805 (HITACHI)<br>* Seite 1, Zeilen 16-62; Seite 2, Zeile 16 - Seite 6, Zeile 47; Seite 7, Zeile 48 - Seite 8, Zeile 18; Figuren 1,7 *<br>--- | 1-4 | |
| A | DE-A-3 332 567 (MÄDER et al.)<br>* Seite 10, Zeile 23 - Seite 11, Zeile 32; Figur 3 *<br>--- | 1-3 | |
| A | DE-A-3 221 906 (LICENTIA)<br>* Zusammenfassung; Seite 12, Zeile 11 - Seite 13, Zeile 17; Figuren 2,3 *<br>--- | 1-3 | **RECHERCHIERTE SACHGEBIETE (Int. Cl.5)**<br><br>H 02 P 5/00<br>H 02 P 7/00 |
| A | PATENT ABSTRACTS OF JAPAN Band 9, Nr. 288 (E-358), 15. November 1985; & JP - A - 60128885 (MITSUBISHI) 09.07.1985<br>* insgesamt *<br>--- | 1-3 | |
| A | PATENT ABSTRACTS OF JAPAN Band 9, Nr. 270 (E-353), 26. Oktober 1985; & JP - A - 60113685 (MITSUBISHI) 20.06.1985<br>* insgesamt *<br>----- | 1-3 | |

Der vorliegende Recherchenbericht wurde für alle Patentansprüche erstellt

| Recherchenort | Abschlußdatum der Recherche | Prüfer |
|---|---|---|
| BERLIN | 05-05-1992 | BEITNER M.J.J.B. |